# FASCICULE DE BREVET EUROPEEN

(11) **EP 1 044 436 B1**
(45) Date de publication et mention de la délivrance du brevet: **15.06.2005**
(21) Numéro de dépôt: 99936731.1
(22) Date de dépôt: 12.08.1999
(51) Int. Cl.: G07F 7/10

(54) **PROCEDE DE COMMUNICATION ENTRE UNE STATION D'UTILISATEUR ET UN RESEAU, NOTAMMENT DU TYPE INTERNET, ET ARCHITECTURE DE MISE EN OEUVRE**
VERFAHREN ZUR KOMMUNIKATION ZWISCHEN EINER BENUTZERSTATION UND EINEM NETZWERK INSBESONDERE DAS INTERNET UND ARCHITEKTUR DAFÜR
METHOD FOR COMMUNICATION BETWEEN A USER STATION AND A NETWORK, IN PARTICULAR SUCH AS INTERNET, AND IMPLEMENTING ARCHITECTURE

(30) Priorité: 13.08.1998 FR 9810401
(43) Date de publication de la demande: 18.10.2000
(60) Demande divisionnaire: 04024744.7
(73) Titulaire: CP8 Technologies, 78431 Louveciennes (FR)
(72) Inventeur: URIEN, Pascal, F-78450 Villepreux (FR)
(74) Mandataire: Renault, Patricia Marie Jacqueline
(86) Numéro de dépôt international: PCT/FR1999/001981
(87) Numéro de publication internationale: WO 2000/010139

(56) Documents cités:
- EP-A- 0 605 070
- EP-A- 0 785 534
- WO-A-97/48210
- WO-A-98/04067
- WO-A-98/10382
- WO-A-98/20411
- DE-A- 4 442 357
- DE-A- 19 545 705
- RANKL W.; EFFING W.: 'Handbuch der Chipkarten', 1995, HANSER VERLAG, GERMANY

## Description

La présente invention concerne un procédé de communication entre une station d'utilisateur et un réseau de transmission d'informations, notamment selon un protocole de type Internet.

Le procédé selon l'invention est plus particulièrement concerné par une station d'utilisateur munie d'un lecteur de carte à "puce" et connectée au réseau précité.

L'invention concerne également une architecture pour la mise en oeuvre d'un tel procédé.

Dans le cadre de l'invention, le terme "station d'utilisateur" doit être compris dans un sens général. La station précitée peut être notamment constituée par un ordinateur personnel fonctionnant sous divers systèmes d'exploitation, tels WINDOWS ou UNIX (tous deux étant des marques déposées). Elle peut être aussi constituée par une station de travail, un ordinateur portable ou un terminal de carte, dit dédié.

De même, dans le cadre de l'invention, le terme "réseau Internet" englobe, outre le réseau Internet proprement dit, les réseaux privés d'entreprises ou similaires, dits "intranet", et les réseaux les prolongeant vers l'extérieur, dits "extranet".

Dans ce qui suit, sans en limiter en quoi que ce soit la portée, on se placera dans le cadre de l'application préférée de l'invention, sauf mention contraire. On considérera donc une station d'utilisateur, que l'on appellera simplement "terminal", munie d'un lecteur de carte à puce et connecté à un réseau de type Internet.

Un système d'application à base de carte à puce comporte généralement les éléments principaux suivants :
- une carte à puce ;
- un système hôte constituant le terminal précité ;
- un réseau de communication, à savoir le réseau Internet dans l'application préférée ;
- et un serveur d'application connecté au réseau.

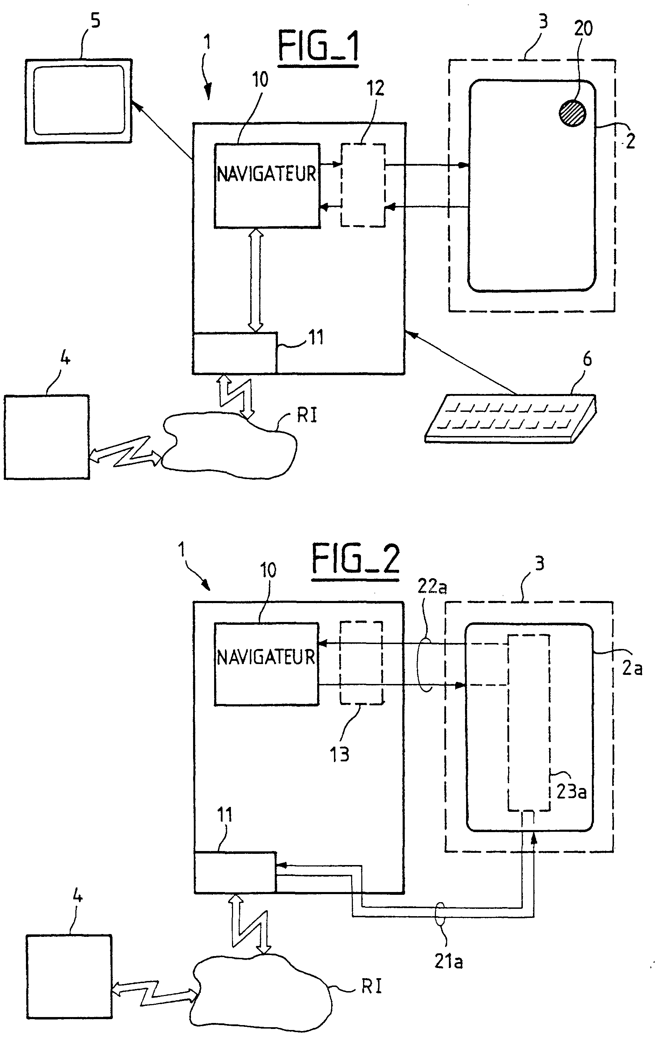

La figure 1 illustre schématiquement un exemple d'architecture de ce type. Le terminal 1, par exemple un ordinateur individuel, comporte un lecteur 3 de carte à puce 2. Ce lecteur 3 peut être ou non physiquement intégré dans le terminal 1. La carte à puce 2 comporte un circuit intégré 20 dont des connexions d'entrées-sorties affleurent en surface de son support pour autoriser une alimentation en énergie électrique et des communications avec le terminal 1. Ce dernier comprend des circuits d'accès à un réseau de transmissions de données *RI*. Ces circuits dépendent, notamment, de la nature du réseau *RI* et du terminal 1. A titre d'exemples, il peut s'agir d'une carte réseau pour un réseau de type local ou d'un modem pour se connecter à une ligne téléphonique commutée ou à un réseau numérique à intégration de services ("RNIS"), pour se connecter au réseau Internet, par exemple via un prestataire de services Internet ("Internet Service Provider" ou "ISP", selon la terminologie anglo-saxonne).

Le document EP-A-785534 divulgue les caractéristiques du préambule de la revendication 1, et le livre "Handbuch der Chipkarten" première édition page 108 divulgue les caractéristiques des couches basses des revendications 15 et 16.

Le terminal 1 comprend naturellement tous les circuits et organes nécessaires à son bon fonctionnement, et qui n'ont pas été représentés dans un but de simplification du dessin : unité centrale, mémoires vive et fixe, mémoire de masse à disques magnétique, lecteur de disquette et/ou de CédéRom, etc.

Habituellement, le terminal 1 est aussi relié à des périphériques classiques, intégrés ou non, tels un écran de visualisation 5 et un clavier 6.

Le terminal 1 peut être mis en communication avec des serveurs connectés au réseau *RI*, dont un seul, 4, est illustré sur la figure 1. Dans le cas de l'application préférée de l'invention, des circuits d'accès 11 mettent le terminal 1 en communication avec les serveurs 4 grâce à un logiciel particulier 10, appelé navigateur, ou "browser" selon la terminologie anglo-saxonne. Celui-ci permet d'accéder à diverses applications réparties sur l'ensemble du réseau *RI*, généralement selon un mode "client-serveur".

Habituellement, les communications sur les réseaux s'effectuent conformément à des protocoles répondant à des standards comprenant plusieurs couches logicielles superposées. Dans le cas d'un réseau *RI* de type Internet, les communications s'effectuent selon des protocoles spécifiques à ce type de communication, qui seront détaillés ci-après, mais qui comprennent également plusieurs couches logicielles. Le protocole de communication est choisi en fonction de l'application plus particulièrement visée : interrogation de pages "WEB", transferts de fichiers, courrier électronique (e-mel, ou "e-mail" selon la terminologie anglo-saxonne), forums ou "news", etc.

Dans un système d'applications à base de carte à puce, comme illustré par l'architecture de la figure 1, cette dernière peut se voir dévolu diverses fonctions. En particulier, elle est utilisée à des fins de sécurité : confidentialité et/ou authentification de l'utilisateur du terminal 1.

Cependant, il est à noter que la carte 2 ne peut communiquer directement avec les navigateurs du commerce, sauf à modifier le code de ces derniers. Les cartes à puce actuelles, qui par ailleurs sont conformes à des standards définis, ont une configuration matérielle et logicielle qui ne permet pas non plus de communiquer directement avec le réseau Internet. En particulier, elles ne peuvent recevoir et transmettre des paquets de données, selon l'un ou l'autre des protocoles utilisés sur ce type de réseau. Il est donc nécessaire de prévoir une pièce de logiciel additionnelle, implantée dans le terminal 1, généralement sous la forme de ce qui est appelé un "plug-in", selon la terminologie anglo-saxonne. Cette pièce de logiciel, qui porte la référence 12 sur la figure 1, effectue l'interface entre le navigateur 10 et la carte 2, plus précisément les circuits électroniques 20 de cette carte 2.

La carte 2 fournit des données au navigateur 10, notamment des données de sécurité : par exemple des données permettant l'identification ou l'authentification, ou encore des données d'autorisation d'accès à tels ou tels serveurs éloignés 4 et/ou applications résidentes sur ces serveurs.

Cette procédure offre un degré de sécurité plus élevé que la simple utilisation des couches logicielles dites sécurisées des navigateurs récents. La carte à puce 2 reste la propriété de l'utilisateur, et sous son contrôle. En particulier, les données de sécurité restent dans la mémoire de la carte 2 et ne sont transmis que sous forme chiffrée au terminal 1. Cependant la chaîne de sécurité présente un "maillon" faible. En effet, le navigateur 10 est en communication avec le monde extérieur. A proprement parler, la communication n'est pas directe, car elle s'effectue via notamment les circuits physiques d'accès 11 et via diverses couches logicielles qui seront décrites ultérieurement de façon plus détaillée. Cependant, le terminal 1 habituellement utilisé pour ce type d'application ne comporte pas de moyens spécifiques, matériels ou logiciels, propres à assurer un haut niveau de sécurité et à l'isoler du monde extérieur. Il reste donc sensible à diverses attaques en provenance du réseau *RI* : "virus", "cheval de Troie", "bombe logique", etc., ce malgré la présence du lecteur de carte 3, et de la carte à puce 2 externe au terminal 1.

Enfin, la carte à puce 2 peut être utilisée pour des applications autres que sécuritaires. Il convient de remarquer que, dans l'état actuel de la technique, le système hôte associé au lecteur de carte 3, c'est-à-dire le terminal 1, est alors associé également à une application particulière. En d'autres termes, il est nécessaire de prévoir un terminal spécifique, dit "dédié", pour chaque application particulière.

Or de nombreux besoins se font sentir pour des applications basées sur l'utilisation de cartes à puces, besoins qui sont imparfaitement ou non satisfaits par les systèmes de l'art connu, dont les caractéristiques principales viennent d'être rappelées. Certains besoins ou exigences peuvent d'ailleurs être antinomiques avec ces caractéristiques.

On peut citer, de façon non exhaustive, les besoinsuivants :
- mobilité personnelle : un utilisateur doit pouvoir accéder à des services de communication n'importe où dans le monde, soit à partir de son propre équipement, soit à partir d'un autre équipement acceptant sa carte à puce, ce avec un degré de sécurité déterminé ;
- environnement standard : où que ce soit l'utilisateur doit pouvoir retrouver son environnement de travail, toujours en bénéficiant des conditions de sécurité précitées, c'est-à-dire, en d'autres termes, qu'un changement d'équipement doit rester "transparent" pour l'utilisateur ;
- mobilité du terminal : le terminal lui-même doit pouvoir être transporté et se connecter à n'importe quel endroit du réseau, l'utilisateur continuant à bénéficier de toutes les possibilités (autorisations de consultation, etc.) dont il bénéficie sur son site habituel ;
- multifonctionnalité et standardisation : les terminaux utilisés doivent pouvoir accepter des cartes à puces multiusages, ce qui entraîne qu'ils ne doivent pas être spécifiques ou, pour le moins, nécessiter le téléchargement ou l'implantation de pièces de logiciel additionnelles ("plug-in", etc.), spécifiques à chaque application.

L'invention vise à pallier les inconvénients des systèmes de l'art connu, dont certains viennent d'être rappelés, tout en offrant un grand degré de sécurisation des communications et en satisfaisant les besoins et exigences qui se font sentir dans le domaine.

Selon une des caractéristiques essentielles de l'invention, tout ou partie du flot de données bidirectionnel entre le terminal et le réseau est dérivé par la carte à puce, de façon à isoler le terminal du monde extérieur. Pour ce faire, au moins une partie des couches logicielles précitées des protocoles de communication est implantée dans la carte à puce. En outre, on prévoit une couche de logiciel de communication spécifique dans la carte à puce et son pendant dans le terminal. Le terme "spécifique" doit être entendu comme spécifique au procédé de l'invention. En effet, ces couches de communications, dites spécifiques, sont banalisées quelle que soit l'application considérée. Elles n'interviennent que dans le processus d'échange de données bidirectionnel entre la carte à puce et le terminal, d'une part, et entre la carte à puce et le réseau, d'autre part.

Les couches logicielles de communication spécifiques comprennent notamment des composants logiciels, dits "agents intelligents", permettant en particulier des conversions de protocoles. Il existe des agents appareillés dans les couches de communication spécifiques respectives associées au terminal et à la carte à puce. Selon le procédé de l'invention, il s'établit des sessions entre agents appareillés.

Il s'ensuit, notamment, que les opérations relatives à la sécurité sont entièrement traitées à l'intérieur de la carte à puce et non dans le terminal. La carte à puce ne transmet plus au terminal les clés ou autres données secrètes qu'elle stocke, sous quelle forme que ce soit, même chiffrées comme dans l'art connu (figure 1).

Par contre, selon un autre aspect de l'invention, la carte à puce peut autoriser des liaisons directes entre le terminal, et plus particulièrement le navigateur pour des transmissions de type Internet, et le réseau, par exemple pour des données ne nécessitant pas un traitement sécuritaire (données graphiques ou images décoratives des pages "WEB", etc.).

Selon une autre caractéristique importante de l'invention, la carte à puce présente au système hôte, c'est-à-dire le terminal, un modèle de terminal virtuel, par exemple sous la forme d'une page en langage "HTML" (pour "HyperText Markup Language"), ou plus généralement en langage hypertexte, ou encore sous la forme d'une pièce de logiciel, dite "applet", en langage "JAVA" (marque déposée), ce qui permet à l'utilisateur de choisir une application particulière parmi celles disponibles et proposées par la carte à puce. De ce fait, le terminal se trouve donc banalisé et supporte une pluralité d'applications. Le système hôte est vu comme un périphérique de la carte à puce, et il met à sa disposition des ressources matérielles, tels un écran de visualisation, un clavier, etc.

L'invention a donc pour objet un système de communication selon la revendication 1.

L'invention a aussi pour objet un procédé d'utilisation d'un système selon les caractéristiques des revendications 10 et 14.

L'invention a encore pour objet un terminal selon les caractéristiques de la revendication 15 et une carte selon les caractéristiqes de la revendication 16.

On constate aisément que l'invention présente de nombreux avantages. Elle offre notamment un degré de sécurisation important pour les communications entre le terminal et le réseau. Elle banalise le terminal, ce qui permet à celui-ci de supporter une pluralité d'applications, sans qu'il soit nécessaire de modifier ni la partie matériel du terminal, ni les applications tournant dans ce terminal. Seule l'implantation dans le terminal d'une couche logicielle de communication spécifique est nécessaire, ce qui peut être réalisé une fois pour toutes, ou par chargement en tant que de besoin à partir de sources diverses : disquettes, CédéRom, téléchargement, etc. Elle reste entièrement compatible avec le matériel existant et sa mise en oeuvre. A titre d'exemple, si un utilisateur ne désire pas bénéficier des possibilités et avantages de l'invention, ou s'il ne possède pas une carte à puce conforme à l'invention, il lui est loisible d'utiliser son terminal et le navigateur associé, ainsi que sa carte à puce classique, de façon conventionnelle, c'est-à-dire de la manière qui a été décrite en regard du système de la figure 1.

L'invention sera mieux comprise et d'autres caractéristiques et avantages apparaîtront à la lecture de la description qui suit en référence aux figures annexées, parmi lesquelles :
- la figure 1 illustre schématiquement un exemple de système d'application à base de carte à puce selon l'art connu ;
- la figure 2 illustre schématiquement un exemple de système d'application à base de carte à puce selon un premier aspect de l'invention ;
- les figures 3A à 3C illustrent schématiquement des aspects complémentaires de l'invention ;
- la figure 4 illustre schématiquement l'architecture complète d'un terminal muni d'un lecteur de carte, conforme à l'invention ;
- la figure 5 illustre schématiquement une pile protocolaire de couches de communication conforme à l'invention ;
- les figures 6A et 6B illustrent schématiquement deux exemples d'échanges de données entre une carte à puce, le terminal selon la figure 4 et un réseau externe ;
- les figures 7A à 7D illustrent schématiquement, sous la forme de blocs diagrammes, différentes variantes d'architectures conformes à l'invention ;
- et la figure 8 illustre schématiquement une configuration logicielle particulière de la carte à puce.

Avant de décrire le procédé de communication selon !'invention et de détailler des architectures pour sa mise en oeuvre, il apparaît tout d'abord intéressant de rappeler brièvement les caractéristiques principales des protocoles de communication sur les réseaux.

L'architecture des réseaux de communication est décrite par diverses couches. A titre d'exemple, le standard "OSI" ("Open System Interconnection"), défini par l' "ISO", comporte sept couches qui vont des couches dites basses (par exemple la couche dite "physique" qui concerne le support de transmission physique) aux couches dites hautes (par exemple la couche dite d' "application"), en passant par des couches intermédiaire, notamment la couche dite de "transport". Une couche donnée offre ses services à la couche qui lui est immédiatement supérieure et requiert de la couche qui lui est immédiatement inférieure d'autres services, via des interfaces appropriées. Les couches communiquent à l'aide de primitives. Elles peuvent également communiquer avec des couches de même niveau. Dans certaines architectures, l'une ou l'autre de ces couches peut être inexistante.

Dans un environnement Internet, les couches sont au nombre de cinq, et de façon plus précise, en allant de la couche supérieure à la couche inférieure : la couche d'applications ("http", "ftp", "e-mail", etc.), la couche de transport ("TCP"), la couche d'adressage de réseau ("IP"), la couche de liens de données ("PPP", "Slip", etc.) et la couche physique.

Ces rappels étant effectués, on va maintenant décrire une architecture de système d'application à base de carte à puce conforme à l'invention. Un exemple d'une telle architecture est représenté schématiquement sur la figure 2. Les éléments communs à la figure 1 portent les mêmes références et ne seront redécrits qu'en tant que de besoin. Pour simplifier le dessin, on n'a pas représenté les divers périphériques connectés au terminal (figure 1 : écran 5 et clavier 6, par exemple). Il doit être clair que l'invention ne nécessite aucune modification de la partie matérielle du terminal 1, ni des applications tournant dans celui-ci. Les seules modifications nécessaires seront précisées ci-après.

Selon une première caractéristique importante de l'invention, tout ou partie du flot de données entre le terminal 1 et le réseau *RI* est dérivé par la carte à puce, désormais référencée 2a. Le flot de données continue cependant de passer par les circuits d'accès au réseau 11. En effet, dans l'état actuel des techniques, les cartes à puce, comme il a été indiqué, ne peuvent être connectées directement sur un réseau, notamment du type Internet.

Les circuits d'accès 11 sont connectés à la carte à puce 2a par un canal de transmission bidirectionnel, symbolisé par deux liaisons séries 21a. De même, la carte à puce 2a est connectée au terminal, et plus précisément au navigateur 10, par un canal de transmission bidirectionnel, symbolisé par deux liaisons séries 22a.

De façon plus précise, les canaux 21a et 22a sont disjoints et bidirectionnels, d'un point de vue logique. Des couches logicielles spécifiques 13 et 23a, qui seront détaillées ultérieurement, permettent en particulier d'obtenir, à partir d'une liaison physique unique et du type dit "half-duplex", en l'état actuel de la technique, deux canaux logiques analogues à 21a et 22a.

Pour obtenir un tel fonctionnement, la carte à puce 2a est spécifique à l'invention. Cette spécificité ne concerne pas la structure matérielle, en tout cas pas la configuration externe de la carte et de la puce (non représentée sur la figure 2). La position de cette dernière est définie par des normes, ainsi que les interfaces physique (plages d'entrées-sorties, etc.) et électrique (nature des signaux, etc.).

Par contre, comme il le sera montré ci-après de façon plus détaillée, une pluralité d'applications (non représentées) peuvent être implantées dans la carte à puce 2a. En outre, il est nécessaire d'y implanter une couche de protocole de communication spécifique représentée, sur la figure 2, par la référence 23a.

De façon symétrique, côté terminal 1, il est nécessaire de prévoir une couche de protocole spécifique, représentée schématiquement sous la référence 13, formant le pendant de la couche spécifique implantée dans la carte à puce 2a.

L'architecture qui vient d'être décrite permet, notamment, de traiter toutes les opérations liées à la sécurité à l'intérieur de la carte à puce 2a : authentification, etc. Les données secrètes restent donc confinées dans les circuits de la carte à puce 2a et ne sont plus transmises au terminal 1.

Selon une autre caractéristique importante de l'invention, la carte à puce 2a propose au système hôte, c'est-à-dire au terminal 1, un modèle de terminal virtuel. Pour ce faire, dans l'application préférée, la carte à puce 2a se comporte comme un serveur "WEB".

La carte à puce 2a est "adressée" par le navigateur 10. Elle lui transmet alors une page de type "WEB" en langage "HTML", un "applet" ou tout autre pièce de logiciel. A titre d'exemple, la page "WEB" peut se présenter sous la forme d'une page d'accueil donnant un choix d'applications possibles et/ou d'hyperliens vers des serveurs extérieurs.

De façon pratique, la carte à puce 2a est avantageusement "adressée" par utilisation d'une adresse "URL" (pour "Universal Resource Location") définissant un rebouclage sur le terminal 1 lui-même, et non un pointage sur un serveur externe. A titre d'exemple, la structure de cet "URL" est habituellement la suivante :
http://127.0.0.1:8080 (1),
dans la quelle 127.0.0.1 est l'adresse "IP" de rebouclage et 8080 est le numéro de port.

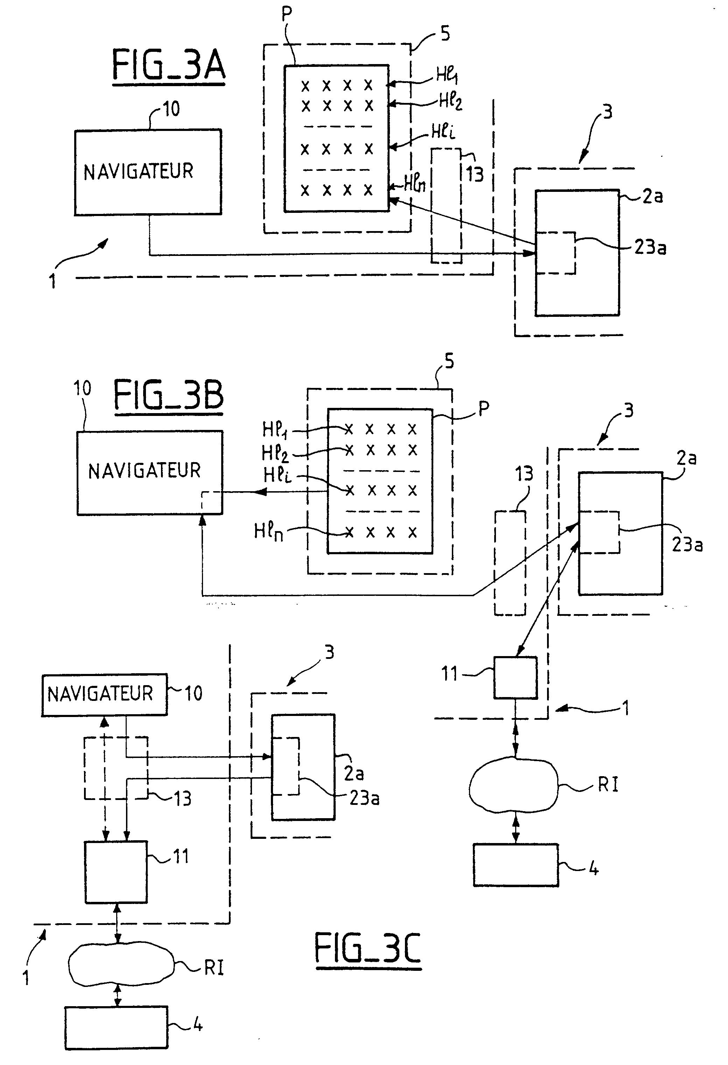

La figure 3A illustre schématiquement ce processus. On suppose sur cette figure, qu'en réponse à la requête du navigateur 10, la carte à puce 2a présente une page *P* en langage "HTML", page affichée par exemple sur l'organe de visualisation 5 du terminal 1. La page *P*, que l'on qualifiera d'accueil, peut afficher, de façon usuelle, différents éléments graphiques ou textes, mais comporte au moins un certain nombre d'hyperliens vers des serveurs externes, *HI*₁, *HI*₂, ..., *HI*_{*i*}, à *HI*ₙ, *i* et *n* étant des nombres arbitraires. *n* représente le nombre maximum de choix possibles. Il est fonction naturellement de la carte à puce 2a insérée dans le lecteur 3. Les choix présentés peuvent dépendre des droits qui sont accordés au possesseur de la carte à puce 2a : abonnement souscrit à des services, niveau d'habilitation, etc. Le processus décrit utilise tout ou partie des couches de communication standards (non représentées), ainsi que les couches spécifiques, 13 et 23a, d'une manière qui sera précisée ultérieurement.

Chaque hyperlien, par exemple l'hyperlien *Hl*_{*i*}, pointe sur une ressource "URL" externe. Le processus de communication et d'échange de données entre le terminal 1 et un serveur 4, connecté au réseau RI et contenant la ressource adressée par l' "URL" associée à l'hyperlien *Hl*_{*i*}, est illustré par la figure 3B. A titre d'exemple, la structure de l' "URL" peut être la suivante :
http://127.0.0.1:8081/www.NOM.com/index.html (2),
dans laquelle 127.0.0.1 est l'adresse "IP" et 8081 est le numéro de port, "NOM.com" le nom d'un site Internet d'une société ou autre entité, conformément aux règles de nommage habituellement utilisées, et "index.html" la page d'accueil de ce site. En lieu et place du suffixe ".com", a priori utilisé pour des organisations à caractère commercial, il existe d'autres suffixes, tels ".fr", ".gov", etc., qui sont associés à la localisation du site Internet ou à la nature de l'organisme.

Le flot de données entre le terminal 1 et le serveur adressé 4 passe par la carte à puce 2a et les circuits 11 d'accès au réseau *RI* (par exemple un modem). La carte à puce 2a traite notamment les problèmes liés à la sécurité des communications : authentification, vérification de données et filtrage, etc. Comme précédemment, il est fait usage des couches de protocoles de communication standards et spécifiques : 13 et 23a.

Selon un autre aspect de l'invention, la carte à puce 2a peut autoriser des échanges de données directs entre le navigateur 10 ou, de façon plus générale entre le terminal 1, et le réseau *RI* et le serveur adressé 4. Ce processus est illustré schématiquement par la figure 3C. Naturellement, ces échanges de données s'effectuent par l'intermédiaire des circuits 11 d'accès au réseau *RI*. Les données concernées sont avantageusement des données n'ayant pas d'incidence sur la sécurité, par exemple des éléments graphiques ou des images, tels que fonds de page, icônes, etc., ou du texte non "sensible" ou non confidentiel.

Du fait des dispositions propres à l'invention, qui viennent d'être décrites, le terminal 1 est donc bien banalisé et supporte une pluralité d'applications. En outre, si certaines applications nécessitent un protocole de communication particulier, la carte à puce 2a peut présenter au terminal 1 des programmes, sous informe de scripts en langage "JAVA" par exemple, qui lui indiquent la façon de l'utiliser.

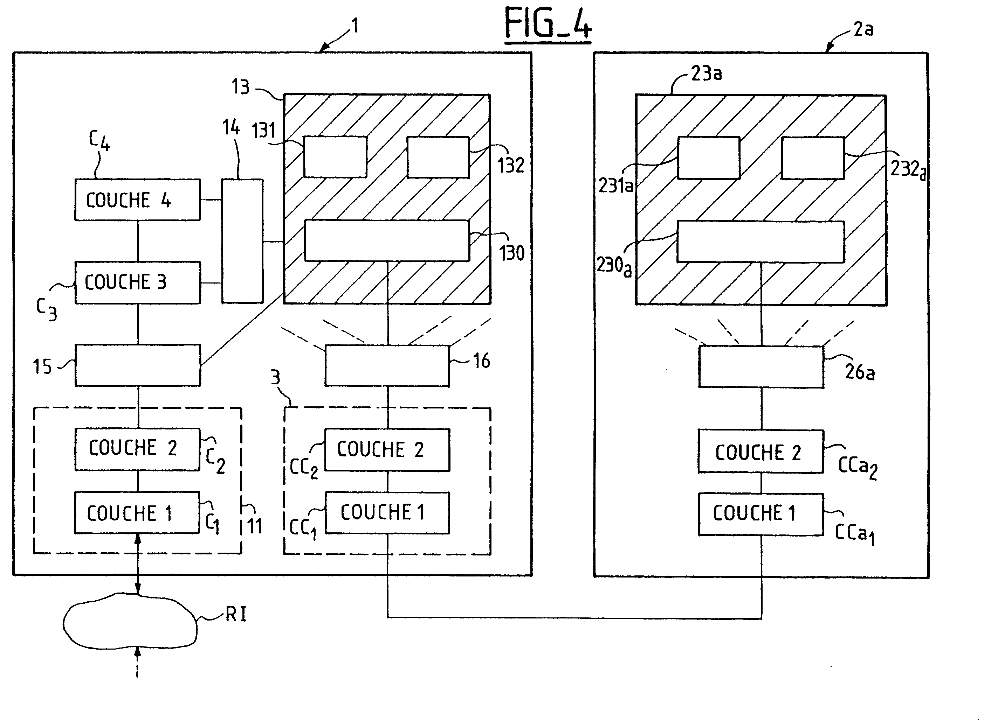

On va maintenant décrire, de façon plus détaillée, un exemple d'architecture pour un système d'application à base de carte conforme à l'invention, par référence à la figure 4.

A l'exception des couches logicielles de protocole de communication spécifiques à l'invention, référencées 13 et 23a, respectivement implantées dans le terminal 1 et la carte à puce 2a, les autres éléments, matériels ou logiciels, sont communs à l'art connu.

Le terminal 1 comprend les circuits 11 d'accès au réseau *RI*, constitués par exemple d'un modem pour le réseau Internet ou d'une carte réseau pour un réseau local. Ces circuits regroupent les couches logicielles inférieures C₁ et C₂, correspondant aux couches "physique" et de "lien de données" précitées.

On a également représenté les couches supérieures C₃ et C₄, correspondant aux couches "d'adressage de réseau" ("IP", dans le cas d'Internet) et de "transport" ("TCP"). La couche supérieure d'application ("http", "ftp", "e-mail", etc.) n'a pas été représentée.

L'interface entre les couches inférieures, C₁ et C₂, et les couches supérieures, C₃ et C₄, est constituée par une couche logicielle 15 généralement appelée "driver couches basses". Les couches supérieures, C₃ et C₄, s'appuient sur cette interface et sont mises en oeuvre par l'intermédiaire de bibliothèques de fonctions spécifiques ou bibliothèques réseau 14, avec lesquelles elles correspondent. Dans le cas du réseau Internet, "TCP/IP" est mis en oeuvre au moyen de bibliothèques dites de "sockets".

Cette organisation permet au navigateur 10 (figure 2) de poser des requêtes vers le serveur 4 (figure 2), pour la consultation de pages "WEB" (protocole "HTTP"), pour le transfert de fichiers (protocole "FTP") ou l'envoi de courrier électronique (protocole "e-mail").

Le terminal 1 comprend également le lecteur de carte 3, intégré ou non. Pour communiquer avec la carte à puce 2a, le lecteur de carte englobe également deux couches basses, CC₁ (couche physique) et CC₂ (couche de lien de données), jouant un rôle similaire aux couches C₁ et C₂. Les interfaces logicielles avec les couches CC₁ et CC₂ sont décrites, par exemple, par la spécification "PC/SC" ("part 6, service provider"). Les couches elles-mêmes, CC₁ et CC₂, sont notamment décrites par les normes ISO 7816-1 à 7816-4.

Dans l'art connu (et également dans l'invention), une couche logicielle supplémentaire 16 forme interface entre les couches applicatives (non représentées) et les couches inférieures, CC₁ et CC₂. La fonction principale dévolue à cette couche est une fonction de multiplexage/démultiplexage.

Les communications avec la carte à puce 2a s'effectuent selon un paradigme similaire à celui utilisé pour la manipulation de fichiers dans un système d'exploitation du type "UNIX" (marque déposée) : OUVRIR ("OPEN"), LIRE ("READ"), ECRIRE ("WRITE"), FERMER ("CLOSE"), etc.

Du côté de la carte à puce 2a, on retrouve une organisation similaire, à savoir la présence de deux couches basses, référencées CCa₁ (couche physique) et CCa₂ (couche de lien de données), ainsi qu'une couche d'interface 26a, tout à fait similaire à la couche 16.

Selon une première caractéristique importante de l'invention, on prévoit, de part et d'autre, c'est-à-dire dans le terminal 1 et dans la carte à puce 2a, les deux couches de protocoles spécifiques : 13 et 23a, respectivement.

Dans le terminal 1, la couche 13 s'interface aux "drivers couches basses" 15, aux bibliothèques 14 des couches réseau, C₃ et C₄, et aux couches protocolaires du lecteur de carte 3, c'est-à-dire les couches inférieures, CC₁ et CC₂, via la couche de multiplexage 16. La couche 13 permet le transfert des paquets réseaux de et vers la carte à puce 2a. En outre, elle adapte les applications existantes telles le navigateur Internet 10 (figure 2), le courrier électronique, etc., pour des utilisations mettant en oeuvre la carte à puce 2a.

Du côté de la carte à puce 2a, on retrouve une organisation tout à fait similaire constituée par une instance supplémentaire de la couche spécifique, référencée 23a, pendant de la couche 13.

De façon plus précise, les couches spécifiques, 13 et 23a, sont subdivisées en trois éléments logiciels principaux :
- un module, 130 ou 230a, de transfert de blocs d'informations entre les couches 13 et 23a, via les couches CC₁, CC₂, CCa₁ et CCa₂ ;
- une ou plusieurs pièces de logiciel 132 et 232a, dites "agents intelligents", qui réalisent, par exemple, des fonctions de conversion de protocoles;
- et un module de gestion de la configuration spécifique, 131 et 231a, respectivement ; module qui peut être assimilé à un agent intelligent particulier.

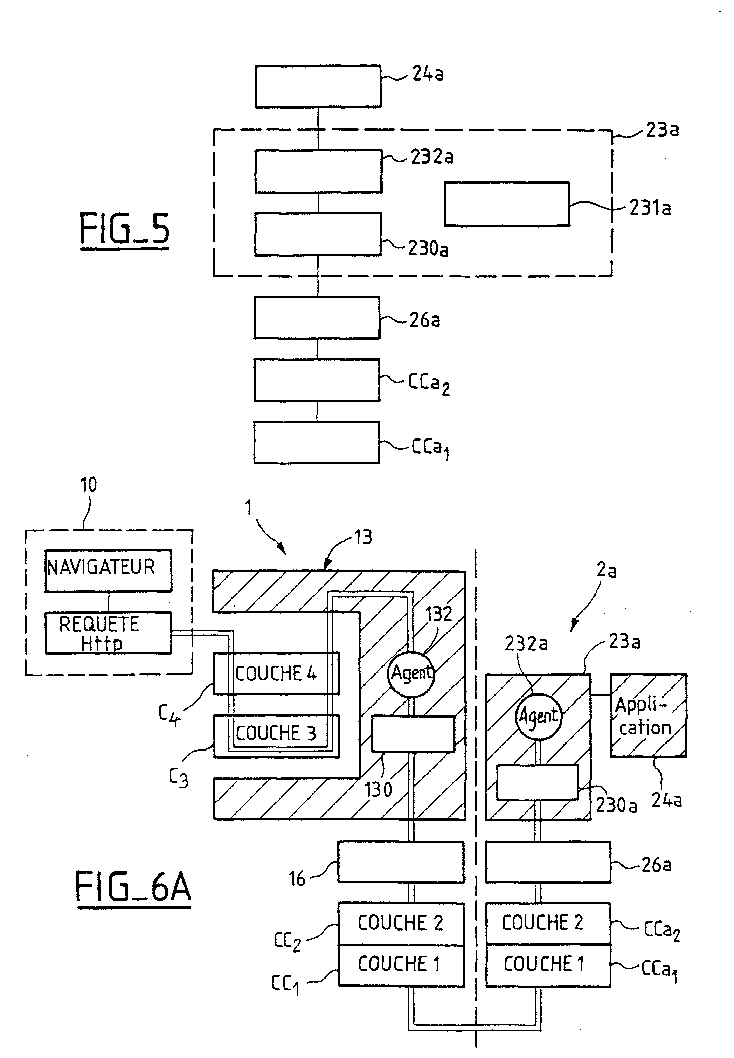

On retrouve donc, dans le terminal 1 et la carte à puce 2a, une pile protocolaire de communication entre les deux entités. La figure 5 illustre la pile protocolaire de communication de la carte à puce 2a, étant entendu que la pile protocolaire de communication du terminal 1 présente une structure similaire.

On trouve, en allant des couches inférieures aux couches supérieures, les couches CCa₁, CCa₂, 26a, 230a, 231a, 232a, précitées et une couche de niveau applicatif 24a. Il doit être entendu que la carte à puce 2a peut comprendre plusieurs applications distinctes.

Les couches de niveau 2 (couches de lien de données), CC₂ et CCa₂, assurent l'échange entre la carte à puce 2a et le terminal 1. Ces couches sont responsables de la détection et l'éventuelle correction d'erreurs de transmission. Différents protocoles sont utilisables, et à titre d'exemples non exhaustifs les suivants :
- la recommandation ETSI GSM 11.11 ;
- le protocole défini par la norme ISO 7816-3, en mode caractère T=0 ;
- le protocole défini par la norme ISO 7816-3, en mode bloc T=1 ;
- ou le protocole défini par la norme ISO 3309, en mode trame "HDLC" (pour "High-Level Data Link Control procedure" ou procédure de commande de liaison à haut niveau).

Dans le cadre de l'invention, on utilisera de préférence le protocole ISO 7816-3, en mode bloc.

De façon connue en soi, à chaque couche de protocole il est associé un certain nombre de primitives qui permettent les échanges de données entre couches de même niveau et d'une couche à l'autre. A titre d'exemple, les primitives associées à la couche de niveau 2 sont du type "demande de données" ("Data.request") et "envoi de données" par la carte ("Data.response"), ainsi que "confirmation de données" ("Data.confirm"), etc.

De façon plus spécifique à l'invention, les couches 13 et 23a sont chargées du dialogue entre la carte à puce 2a et l'hôte, c'est-à-dire le terminal 1. Ces couches permettent l'échange d'informations entre un utilisateur (non représenté) du terminal 1 et la carte à puce 2a, par exemple via des menus déroulants sous la forme d'hypertexte au format "HTML", comme il a été montré au regard des figures 3A et 3B (page *P*). Elles permettent aussi la mise en place d'une configuration adaptée pour l'émission et/ou la réception de paquets de données.

Comme il a été indiqué ci-dessus, les couches comprennent trois entités distinctes.

La première couche, 130 ou 230, est essentiellement constituée par un multiplexeur logiciel. Elle permet l'échange d'informations entre la carte à puce 2a et le terminal hôte 1, sous la forme d'unités de données de protocole. Elle joue un rôle similaire à celui d'un commutateur de paquets de données. Ces unités sont émises ou reçues via la couche de niveau 2 (couche de liens de données). Ce protocole particulier de communication permet de mettre en communication au moins une paire d' "agents intelligents". Le premier agent de chaque paire, 132, est situé dans la couche 13, côté terminal 1, le second, 232a, est situé dans la couche 23a, côté carte à puce 2a. Une liaison entre deux "agents intelligents" est associée à une session. Une session est un échange de données bidirectionnel entre ces deux agents.

Un agent intelligent peut réaliser tout ou partie de fonctions des couches de niveau 3 et 4, en fonction de la configuration mise en oeuvre par le terminal 1.

Un agent intelligent particulier est identifié avantageusement par un. nombre entier, par exemple sur 16 bits (nombre compris entre 0 et 65535). Cet identificateur est utilisé, par exemple, dans une unité de donnée de protocole constituant une référence de destination et une référence de source.

Il existe deux grandes catégories d'agents intelligents : les agents de type "serveur", qui sont identifiés par une référence fixe, et les agents de type "client", qui sont identifiés par une référence variable, délivrée par une couche spécifique, 130 ou 230a.

Le processus d'ouverture d'une session est habituellement le suivant : un agent intelligent de type "client" ouvre la session vers un agent intelligent de type "serveur". Les couches 130 et 230a gèrent des tables (non représentées) qui contiennent la liste des agents intelligents présents, côté terminal hôte 1 et carte à puce 2a.

Les agents intelligents sont associés à des propriétés ou attributs particuliers. Pour fixer les idées, et à titre d'exemple non limitatif, les six propriétés suivantes sont associées aux agents intelligents :
- "hôte" : agent localisé dans le terminal ;
- "carte" : agent localisé dans la carte à puce ;
- "local" : agent ne communiquant pas avec le réseau ;
- "réseau" : agent communiquant avec le réseau ;
- "client" : agent qui initialise une session ;
- "serveur" : agent qui reçoit une demande de session.

Dans le cas du réseau Internet, application principale visée par l'invention, les agents clients/serveurs, côté carte à puce, réalisent des protocoles client et/ou serveur qui sont décrits par des spécifications pour commentaires, connues sous le sigle anglo-saxon "RFC" (pour "Reserved For Command"). A titre d'exemple non limitatif, pour le protocole "HTTP 1.1 ", la spécification est "RFC 2068".

Les agents intelligents permettent d'échanger des données (de l'hypertexte par exemple), mais également de déclencher des transactions réseau.

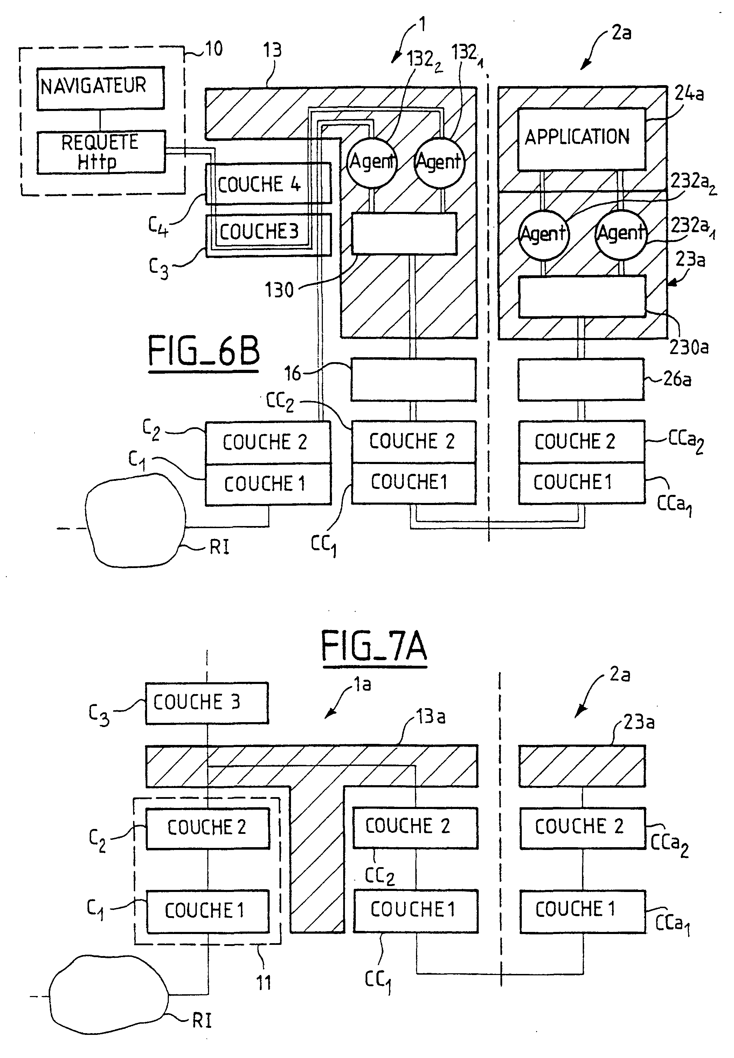

Les modules de gestion de configuration, 131 et 231 a, respectivement, sont des agents intelligents particuliers. Par exemple, le module 131, côté terminal hôte 1, gère notamment des informations relatives à la configuration de ce terminal (modes de fonctionnement, comme il le sera précisé à propos des figures 7A à 7D), liste des autres agents présents, etc. Le module 231 a, côté carte à puce 2a, a des fonctions analogues. Ces deux agents peuvent être mis en communication l'un avec l'autre pour établir une session.

On va maintenant décrire deux exemples de ces processus par référence aux figures 6A et 6B.

La figure 6A illustre, sous forme de bloc-diagramme, l'architecture correspondant au processus de présentation au terminal hôte 1 d'un modèle de terminal virtuel. Cette figure explicite, de façon détaillée, le processus précédemment décrit au regard de la figure 3A. Les éléments communs aux figures précédentes portent les mêmes références, et ils ne seront redécrits qu'en tant que de besoin.

Le processus décrit nécessite la mise en correspondance d'une seule paire d'agents intelligents, 132 et 232a.

Comme indiqué précédemment, le navigateur "WEB" 10 présent dans le terminal 1 émet une requête "HTTP" impliquant un rebouclage sur lui-même (voir (1)). La requête est transmise à la couche C₄ (couche de transport "TCP"), puis à la couche C3 (couche d'adressage de réseau "IP"). Du fait que l' "URL" implique une adresse "IP" de rebouclage, la requête est renvoyée à la couche C₄ qui la transmet à la couche spécifique, c'est-à-dire à l'agent intelligent 132. Celui-ci ouvre une session avec son pendant dans la carte à puce 2a, c'est-à-dire l'agent intelligent 232a. Il convertit l' "URL" en un format acceptable par les couches 130 et 230a. L'échange de données bidirectionnelles s'effectue au travers des différentes couches des piles : 130, 16, CC₂ et CC₁, pour le terminal 1, et CCa₁, CCa₂, 26a et 230a, pour la carte à puce 2a.

En retour, l'agent intelligent 232a envoie des instructions et/ou données contenues dans la couche applicative 24a. Ces dernières, comme il a été indiqué, peuvent prendre la forme d'une page "WEB" de menu déroulant au format "HTML" (figure 3A : *P*).

Par contre, une connexion "HTTP" avec le réseau *RI* implique la coopération de deux paires d'agents intelligents. La figure 6B illustre schématiquement un tel processus, sous la forme d'un bloc-diagramme. Les éléments communs aux figures précédentes portent les mêmes références et ne seront redécrits qu'en tant que de besoin.

L' "URL" émise par le navigateur est du type de celui décrit par la formule (2) précitée.

Du côté terminal 1, un premier agent intelligent, 132₁, à propriétés de type "local", assure les échanges entre le terminal hôte 1 et un agent 232a₁, situé sur la carte à puce 2a, également à propriétés de type "local".

De même, un second agent intelligent, 132₂, à propriétés de type "réseau", assure les échanges entre un agent, 232a₂, situé sur la carte à puce 2a, également à propriétés de type "réseau", et le réseau *RI*.

Cette connexion met donc en oeuvre deux sessions :
1/ agent local hôte 132₁ ⇔ agent local carte 232a₁,
2/ agent réseau hôte 132₂ ⇔ agent réseau carte 232a₂.

Les couches 130 et 230a assurent notamment un multiplexage/démultiplexage logiciel de façon à aiguiller les données de et vers les agents 132₁ et 232a₁, d'une part, et 132₂ et 232a₂ d'autre part.

Pour la première session, le flot de données traverse les couches du terminal 1 : C₄, C₃, C₄, 13 (agent 1321 et couche 130), 16, CC₂ et CC₁, et les couches de la carte à puce 2a : CCa₁, CCa₂, 26a, 23a (couche 230a et agent 232a₁), pour atteindre la couche applicative 24a.

Pour la seconde session, le flot de données, à partir de la couche applicative 24a, traverse les couches de la carte à puce 2a : 23a (agent 232a₂ et couche 230a), 26a, CCa₂, CCa₁ et les couches du terminal 1 : CC₁, CC₂, 16, 13 (agent 132₂ et couche 130), C₄ à C₁, avant d'atteindre le réseau *RI*.

On va maintenant décrire plusieurs exemples de configurations possibles, par référence aux figures 7A à 7D. En effet, notamment selon le type de réseau considéré et la nature du terminal, la partition des couches logicielles du protocole de communication peut s'effectuer de différentes manières. Les éléments communs à ces figures et aux figures précédentes portent les mêmes références et ne seront redécrits qu'en tant que de besoin.

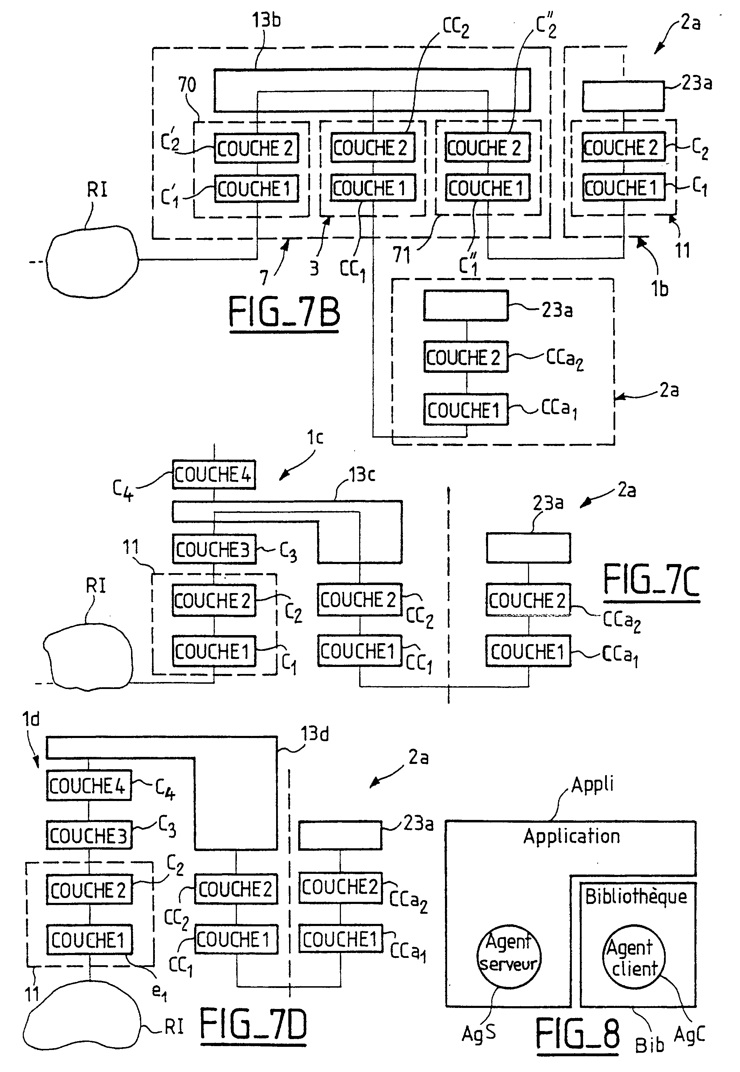

Les figures 7A et 7B illustrent schématiquement, sous forme de blocs diagrammes, deux architectures plus particulièrement adaptées à un mode que l'on peut appeler "partage de réseau". Selon ce mode, la carte à puce et le terminal partagent la même adresse, par exemple la même adresse "IP", si le réseau *RI* est du type Internet. Le destinataire final de paquets de données réseau est déterminé en fonction de critères pré-établis.

La figure 7A illustre schématiquement une architecture avec un partage logiciel d'une couche réseau. Le terminal, ici référencé 1a, possède une couche réseau C₃ (couche adressage réseau). La carte à puce 2a reçoit des paquets réseau adressés au terminal en fonction de certains paramètres (adresse de l'émetteur, etc.). Les paquets sont émis avec l'adresse réseau du terminal 1a. Comme précédemment, il est prévu deux couches spécifiques, 13a et 23a, situées dans le terminal 1a et la carte à puce 2a, respectivement. On n'a pas représenté les couches 16 et 26a (figures 6A et 6B).

La figure 7B illustre schématiquement une architecture avec un partage matériel d'une couche réseau. Un dispositif matériel 7 est inséré entre le réseau *RI* et le terminal, ici référencé 1b. Le dispositif 7 permet de recevoir des paquets réseau adressé au terminal 1b en fonction de paramètres particuliers (adresse de l'émetteur, etc.). Les paquets sont émis avec l'adresse réseau du terminal 1b. Le dispositif matériel comporte, par exemple, deux circuits de communication, par exemple du type cartes réseau, 70 et 71, comprenant chacune deux couches inférieures de protocole de communication, C'₁-C'₂ et C"₁-C"₂, respectivement. La carte ou les circuits 70 sont reliés au réseau *RI*. La carte ou les circuits 71 sont reliés aux circuits d'accès au réseau 11, ou de façon plus générale, à la carte de communication, présents sur le terminal 1b. Les communications entre le réseau *RI* et le terminal 1b s'effectuent donc par l'intermédiaire du dispositif matériel 7 incorporant la couche spécifique 13b.

Le dispositif matériel 7 est en outre connecté à un sous-ensemble 3, intégré ou non, de lecture de carte à puce 2a. Ce sous-ensemble lecteur comprend, comme précédemment, les couches CC₁ et CC₂. De même, la carte à puce 2a comprend les deux couches basses CCa₁ et CCa₂ et la couche spécifique 23a.

La figure 7C illustre schématiquement, sous forme de bloc diagramme, une architecture plus particulièrement adaptée à un fonctionnement en mode dit "passerelle".

Selon ce mode, la carte à puce 2a possède une adresse réseau individuelle. Le terminal, ici référencé 1c, se comporte comme une passerelle d'accès de la carte à puce 2a au réseau *RI*. La couche spécifique côté terminal, référencée 13c, est disposée entre la couche C₃ (couche d'adressage réseau) et la couche CC₂. Comme précédemment, la carte à puce 2a comporte la couche spécifique 23a, formant pendant à la couche 13c.

La figure 7D illustre schématiquement, sous forme de bloc diagramme, une architecture plus particulièrement adaptée à un fonctionnement en mode dit "tunnel".

Selon ce mode, le terminal, ici référencé 1d, ne peut fournir ou partager une couche de niveau 3. La seule méthode possible de communication entre la carte à puce 2a, et le réseau *RI* consiste à établir un "tunnel" où circulent des données applicatives, qui sont éventuellement traduites par un convertisseur de protocole dans la couche spécifique côté terminal, ici référencée 13d. La couche spécifique 13d est disposée entre la couche de niveau 4 (C₄) et une couche applicative (non représentée). Comme précédemment, la carte à puce 2a comporte une couche spécifique 23a, formant pendant à la couche 13d.

Les caractéristiques du terminal et/ou les configurations possibles peuvent être connues par la carte à puce, ou au contraire commandées par celle-ci à l'aide de primitives.

A titre d'exemples non limitatifs, une première primitive, que l'on appellera :
*"TerminalGetConfiguration.request",* (obtention de la configuration), émise par la carte à puce, à destination du terminal, permet de lui demander les caractéristiques du terminal et les différentes configurations possibles. La réponse à la question posée est obtenue par une primitive duale :
"*TerminalGetConfiguration.response*".

Une deuxième primitive, que l'on appellera :
*"TerminalSetConfiguration.request".* (commande de configuration), émise par la carte à puce, à destination du terminal, permet de configurer le terminal. La réponse à la commande, véhiculée par une primitive duale :
*"TerminalSetConfiguration.response",* permet d'obtenir toutes les informations nécessaires à une transaction réseau (adresse réseau, configuration, etc.).

Lorsqu'une configuration est disponible, la carte à puce peut recevoir et émettre des données depuis et vers le réseau *RI*. Les données échangées entre la carte à puce et le terminal sont constituées de paquets réseaux lorsque le terminal offre cette possibilité ou des données d'application lorsque le mode tunnel est mis en oeuvre (figure 7D).

Les applications disponibles sur le système hôte de la carte à puce peuvent communiquer avec la carte à puce au moyen de convertisseurs de protocole. Cette fonction est dévolue à des agents intelligents situés dans les couches spécifiques de protocote de communication.

Du côté terminal, les méthodes de communication entre applications et agents intelligents peuvent être diverses, en fonction de la nature du terminal, notamment du système d'exploitation. A titre d'exemples non limitatifs, on peut citer :
- des "API" ("Application Programmatic Interface" ou interface programmatique d'application) ;
- des "DLL" ("Dynamic Link Library" ou bibliothèque à liens dynamiques);
- utilisation d'une adresse de boucle, telle l' "URL" (1) précitée.

Enfin, comme illustré schématiquement par la figure 8, un agent intelligent *AgS,* dit serveur, peut être intégré dans une application *Appli* localisée dans la carte à puce. Dans ce cas la référence associée identifie l'application *Appli.* Un agent intelligent *Agc*, dit client, mémorisé dans une bibliothèque *Bib* pourra être utilisé via une "API", par exemple,. Dans une telle configuration, le serveur mémorise des clés et utilise les services du client qui a la connaissance du protocole de communication nécessaire.

Pour résumer ce qui précède, on va maintenant décrire, de façon détaillée, les principales étapes d'un exemple de mise en oeuvre complète :
1/ la carte à puce est introduite dans un lecteur relié à un terminal hôte ;
2/ le terminal hôte émet ce qui est appelé un jeton d'acquittement ;
3/ la carte à puce obtient la configuration du terminal hôte via la primitive :
   *"TerminalGetConfiguration.request"* précitée et, en fonction de la réponse, la carte à puce prend l'initiative de l'établissement d'un dialogue ou, au contraire, attend une requête du terminal ;
4/ le terminal obtient un index des fonctions présentes dans la carte à puce via une "URL" de rebouclage : http://127.0.0.1:8080/index.html (voir (1)), par une session du type :
   "HTTP ⇔ Agent intelligent local hôte client ⇔ couche spécifique 130 ⇔ couche spécifique 230 ⇔ Agent intelligent local carte serveur";
5/ à réception, l'utilisateur du terminal sélectionne une des applications disponibles ;
6/ il décide de se connecter à un serveur externe auquel la carte à puce lui donne accès ;
7/ le navigateur génère une "URL", par exemple :
   http:// 127.0.0.1:8080/ www.NOM.com/index.html
   (voir (2)), transmise à la carte à puce, via un convertisseur de protocole, par une session du type
   "HTTP ⇔ Agent intelligent local hôte client ⇔ couche spécifique 130 ⇔ couche spécifique 230 ⇔ Agent intelligent local carte serveur";
8/ une invite à composer un code d'identification apparaît alors, par une session entre deux agents intelligents d'échanges de données, et le code confidentiel est ensuite transmis à la carte à puce ;
9/ la carte à puce vérifie la validité du code entré à l'étape précédente, en fonction de données de sécurité stockées dans celle-ci ;
10/ une configuration est déterminée pour le terminal et est appliquée à l'aide de la primitive "*TerminalSetConfiguration.request*" précitée;
11/ la carte à puce se connecte au serveur d'application sélectionné, en fonction de règles édictées par l'application ;
12/ l'utilisateur obtient en réponse à sa requête (du type "HTTP") un accusé de réception ou un fichier en fonction du type de service mis en oeuvre.

A la lecture de ce qui précède, on constate aisément que l'invention atteint bien les buts qu'elle s'est fixés.

Elle présente de nombreux avantages, comme il a été rappelé et notamment les suivants : un degré de sécurisation important pour les communications entre le terminal et le réseau, et la banalisation du terminal, ce qui permet à celui-ci de supporter une pluralité d'applications, sans qu'il soit nécessaire de modifier ni la partie matériel du terminal, ni les applications tournant dans ce terminal. Seule l'implantation dans le terminal d'une couche logicielle de communication spécifique est nécessaire. Elle reste entièrement compatible avec le matériel existant et sa mise en oeuvre. Elle permet une grande mobilité de l'utilisateur et/ou de son terminal, tout en conservant le degré de sécurité précité. Elle offre enfin un confort d'utilisation élevé, car l'utilisateur peut retrouver, sur toute machine acceptant sa carte à puce personnelle, son environnement habituel. On peut parler, à ce sujet, de "domicile virtuel".

Il doit être clair cependant que l'invention n'est pas limitée aux seuls exemples de réalisations explicitement décrits, notamment en relation avec les. figures 2 à 8.

Notamment, comme il a été indiqué, les architectures mettant en oeuvre le procédé selon l'invention, et plus particulièrement le découpage et la répartition des couches de protocole de communication entre le terminal hôte et la carte à puce peuvent être diverses.

De même, les exemples d'instructions et de commandes particulières, ainsi que les modes d'interfaçage n'ont été donnés que pour mieux préciser les caractéristiques de l'invention, mais ne sauraient en limiter sa portée.

Il doit être clair aussi que, bien qu'elle soit particulièrement adaptée à des applications dites sécuritaires (authentification, etc.), on ne saurait cantonner l'invention à ce seul type d'applications. Une pluralité d'applications peut être stockée dans la carte à puce, les seules limitations importantes étant la capacité de mémoire de celle-ci, le débit de transmission maximum et la puissance de ses circuits de traitement de l'information (microprocesseur ou microcontrôleur). Il est d'ailleurs à remarquer que ces limitations s'amenuisent avec le temps, en fonction des évolutions technologiques, lesquelles sont particulièrement rapides dans ce domaine.

Enfin, les réseaux auxquels peut être connecté le terminal peuvent être divers (réseaux locaux, réseau Internet, etc.). Il en est de même des protocoles de transmission : protocoles de type Internet, protocole compatible avec le MINITEL (marque déposée), etc.

## Revendications

1. Système de communication entre un terminal (1) muni d'un lecteur de carte à puce (3), une carte à puce et/ou un réseau de transmission de données (*RI*), ledit terminal possédant une première pile protocolaire d'accès au réseau (*RI*) comprenant un nombre déterminé de couches logicielles de communication (C₁-C₄), et ledit lecteur de carte à puce (3) et ladite carte à puce comprenant des deuxième et troisième piles protocolaires, chacune comprenant au moins des couches de communication logicielles (CC₂-CC₁, CCa₂-CCa₁), dites basses, de manière à permettre des échanges de données entre la carte à puce et ledit terminal (1), **caractérisé en ce que** la carte à puce (2a) comprend une première pièce de logiciel spécifique (23a), formant interface avec lesdites couches basses (CCa₂, CCa₁) de la troisième pile protocolaire et avec au moins une application (24a) enregistrée dans la carte à puce (2a), **en ce que** le terminal (1) comprend une seconde pièce de logiciel spécifique (13) formant interface avec lesdites couches basses (CC₂-CC₁) de la deuxième pile protocolaire et avec des couches déterminées de ladite première pile protocolaire (C₂,C₃,C₄), **en ce que** lesdites première et seconde pièces de logiciel spécifiques (13, 23a) sont agencées pour effectuer une conversion de protocole entre un protocole de type réseau dans lequel sont exprimées des informations du réseau, du terminal, ou de ladite application, et un protocole de communication entre lesdites couches basses, et **en ce que** lesdites première et seconde pièces de logiciel spécifiques (13, 23a) coopèrent l'une avec l'autre de manière à permettre l'établissement d'une session d'échanges de données bidirectionnels entre le terminal (1) et la carte à puce (2a), et/ou ledit réseau (*RI*), de manière à ce que lesdites données transitent en tout ou partie par la carte à puce (2a).

2. Système selon la revendication 1, dans lequel lesdites pièces de logiciel spécifiques sont agencées de manière à ce que ladite carte à puce (2a ) présente au dit terminal (1) un modèle prédéterminé de terminal dit virtuel, transformant ladite carte à puce (2a) en serveur et/ou client.

3. Système selon l'une quelconque des revendications 1 ou 2, **caractérisé en ce que** la première pile protocolaire comprend d'une part des circuits d'accès au réseau (11) regroupant des couches dites basses (C₁, C₂), d'autre part des couches dites hautes (C₃, C₄), enfin une couche d'interface (15) interposée entre les couches basses et hautes, les circuits d'accès au réseau étant connectés audit réseau (*RI*), et **en ce que** ladite pièce de logiciel spécifique (13a) côté terminal (1a) s'interface avec la couche d'interface (15) de manière à ce que ledit terminal (1a) et ladite carte à puce (2a) puissent partager une même adresse sur le réseau (*RI*) sous la commande de la pièce de logiciel spécifique (13a) côté terminal.

4. Système selon l'une quelconque des revendications 1 à 3, **caractérisé en ce que** lesdites pièces de logiciel spécifique (13, 23a) comprennent :
- au moins une paire de premières entités logicielles appariées (132, 232a) constituées par des modules logiciels, dits agents intelligents (132, 232a) établissant lesdites sessions ;
- deux entités supplémentaires constituées d'un module de transfert de données (130, 230a), formant interface avec lesdites couches basses (CC₂-CC₁, CCa₂-CCa₁) des deuxième et troisième piles protocolaires ; et un module de gestion (131, 231).

5. Système selon la revendication 4, **caractérisé en ce que** lesdits agents intelligents (132, 232a) comprennent des agents intelligents dits clients, ouvrant lesdites sessions d'échanges de données, et des agents intelligents dits serveurs, fournissant lesdites données.

6. Système selon la revendication 4, **caractérisé en ce que** lesdits agents intelligents (132, 232a) sont associés à au moins l'un des attributs suivants :
- un premier attribut dit "hôte", indiquant que l'agent intelligent est situé dans ledit terminal (1) ;
- un deuxième attribut dit "carte", indiquant que l'agent intelligent est situé dans ladite carte à puce (2a) ;
- un troisième attribut dit "local", indiquant que l'agent intelligent ne communique pas avec ledit réseau (*RI*) ; et
- un quatrième attribut dit "réseau" indiquant que l'agent intelligent communique avec ledit réseau (*RI*).

7. Système selon la revendication 3, **caractérisé en ce qu'**il est prévu un dispositif matériel supplémentaire (7) disposé entre ledit réseau (*RI*) et ledit terminal (1), **en ce que** ledit dispositif matériel supplémentaire (7) comporte deux circuits de communication (70, 71), comprenant chacun deux couches de protocole de communication, dites basses (C'₁-C'₂, C"₁-C"₂), les premiers circuits (70) étant connectés au réseau (RI) et les seconds circuits (71) étant connectés auxdits circuits d'accès au réseau (11) du terminal (1b), **en ce que** le dispositif matériel supplémentaire (7) est connecté audit lecteur (3) de carte à puce (2a), et **en ce que** ladite pièce de logiciel spécifique (13b), côté terminal (1b), est comprise dans le dispositif matériel supplémentaire (7) et **en ce qu'**elle forme interface avec lesdites couches basses (C'₁-C'₂, C"₁-C"₂) desdits premiers et seconds circuits de communication (70, 71) et les couches dites basses (CC₁, CC₂) du lecteur (3) de carte à puce (2a), de manière à ce que le terminal (1b) et la carte à puce (2a) puissent partager une même adresse sur le réseau (*RI*), sous la commande de la pièce de logiciel spécifique (13b) côté terminal.

8. Système selon la revendication 3, **caractérisé en ce que** ladite pièce de logiciel spécifique (13c) côté terminal (1c) forme interface avec lesdites couches basses (CC₁, CC₂) de ladite deuxième pile protocolaire, et est disposée entre des couches de niveaux supérieurs, dits 3 et 4 (C₃, C₄), de ladite première pile protocolaire, de manière à ce que, ladite carte à puce (2a) possédant une adresse distincte du terminal (1c) sur le réseau (*RI*), le terminal (1b) se comporte, pour la carte à puce (2a), comme une passerelle d'accès au réseau (*RI*), sous la commande de la pièce de logiciel spécifique (13c) du terminal (1c).

9. Système selon la revendication 3, **caractérisé en ce que** ladite pièce de logiciel spécifique (13d) côté terminal (1d) forme interface avec lesdites couches basses (CC₁, CC₂) de ladite deuxième pile protocolaire, et est disposée entre une couche de ladite première pile protocolaire de niveau supérieur, dit 4 (C₄), et une couche dite applicative, de manière à autoriser la circulation de données de type applicatif entre ladite carte à puce (2a) et le terminal (1d).

10. Procédé d'utilisation d'un système selon la revendication 4, **caractérisé en ce qu'**il comprend une étape consistant en l'établissement d'une session entre les agents d'une paire déterminée desdits agents (132, 232a), de manière à transmettre audit terminal (1) des données d'une application (24a) enregistrées dans ladite carte à puce (2a), lesdites données consistant en une liste (*P*) d'applications autorisées à un utilisateur du terminal.

11. Procédé selon la revendication 10, **caractérisé en ce que** ledit réseau (*RI*) étant de type Internet et ledit terminal (1) comprenant un navigateur Internet (10), lesdites données consistent en une page (*P*) écrite dans un langage hypertexte comprenant des hyperliens (*HI*₁-*HI*_{*n*}) pointant vers des ressources comprises dans des serveurs (4) externes au terminal (1), et **en ce que** la sélection d'un desdits hyperliens (*HI*_{*i*}) génère une adresse déterminée et actionne des paires déterminées d'agents intelligents (132₁-232a₁,132₂-232a₂), instaurant des sessions permettant des échanges de données entre le terminal (1) et ladite carte à puce (2a), et le terminal (1) et ledit réseau Internet (*RI*), de manière à atteindre la dite ressource sélectionnée (4), lesdites données transitant en tout ou partie par la carte à puce (2a).

12. Procédé selon la revendication 11, **caractérisé en ce que** l'adressage de ladite carte à puce (2a) par ledit navigateur Internet (10) s'effectue par la génération d'une adresse de rebouclage sur ledit terminal (1).

13. Procédé selon la revendication 11, **caractérisé en ce qu'**il comprend une étape d'identification dudit utilisateur et de filtrage de données reçues et envoyées, de et vers ledit réseau (*RI*), à l'aide de données secrètes résidant dans ladite carte à puce (2a), et **en ce que** cette étape est réalisée dans la carte à puce (2a).

14. Procédé d'utilisation d'un système selon la revendication 4, **caractérisé en ce qu'**il comprend une étape consistant en l'établissement d'une session entre les agents d'une paire déterminée desdits agents (132, 232a), de manière à transmettre audit terminal (1) des données d'une application (24a) enregistrées dans ladite carte à puce (2a), lesdites données configurant le terminal (1) suivant un modèle de terminal virtuel, de manière à ce que ladite application puisse être exécutée dans le terminal (1).

15. Terminal (1) muni d'un lecteur de carte à puce (3), possédant une première pile protocolaire permettant de mettre en communication une application du terminal avec un réseau de transmission de données (*RI*), comprenant un nombre déterminé de couches logicielles de communication (C₁-C₄), et ledit lecteur de carte à puce (3) comprenant une deuxième pile protocolaire comprenant au moins des couches de communication logicielles (CC₂-CC₁), dites basses, de manière à permettre des échanges de données entre une carte à puce et ledit terminal (1), **caractérisé en ce qu'**il comprend une pièce de logiciel spécifique (13) faisant en sorte que seules lesdites couches basses (CC₂-CC₁) de la deuxième pile protocolaire communiquent avec des couches déterminés de la dite première pile protocolaire (C₂,C₃,C₄) en faisant transiter tout ou partie de données par une carte à puce et **en ce que** ladite pièce de logiciel spécifique (13) est agencée pour participer une conversion de protocole entre un protocole de type réseau dans lequel sont exprimées des informations du réseau, du terminal, ou de la carte à puce, et un protocole de communication utilisé par lesdites couches basses.

16. Carte à puce (2a) incluant une pile protocolaire comprenant au moins des couches de communication logicielles (CCa2-CCa1), dites basses, de manière à permettre des échanges de données avec un terminal (1) ayant accès à un réseau de transmission de données (RI) et muni d'un lecteur de carte à puce, **caractérisée en ce qu'**elle comprend une pièce de logiciel spécifique (23a) formant interface avec lesdites couches basses (CCa2-CCa1) de la pile protocolaire et avec au moins une application enregistrée dans la carte à puce, et **en ce que** ladite pièce de logiciel spécifique (23a) est agencée pour participer à une conversion de protocole entre un protocole de type réseau dans lequel sont exprimées des informations du réseau, du terminal, ou de la carte à puce, et un protocole de communication utilisé par lesdites couches basses.

## Patentansprüche

1. Kommunikationssystem zwischen einem Terminal (1) mit einem Lesegerät für Chipkarten (3), einer Chipkarte und/oder einem Datenübertragungsnetzwerk (RI), wobei der besagte Terminal einen ersten Protokollstapel für den Zugang zum Netzwerk (RI) mit einer bestimmten Anzahl von Kommunikationssoftwareschichten (C1-C4) besitzt und das besagte Lesegerät für Chipkarten (3) sowie die besagte Chipkarte zweite und dritte Protokollstapel umfassen, die jeweils mindestens die als untere bezeichnete Softwarekommunikationsschichten (CC₂-CC₁, CCa₂-CCa₁) umfassen, so dass zwischen der Chipkarte und dem besagten Terminal (1) ein Datenaustausch ermöglicht wird, **dadurch gekennzeichnet, dass** die Chipkarte (2a) ein erstes spezifisches Softwareteil (23a) umfasst, das eine Schnittstelle mit den besagten unteren Schichten (CCa₂, CCa₁) des dritten Protokollstapels und mit mindestens einer auf der Chipkarte (2a) gespeicherten Applikation (24a) bildet, und dass der Terminal (1) ein zweites spezifisches Softwareteil (13) umfasst, das eine Schnittstelle mit den besagten unteren Schichten (CC₂-CC₁) des zweiten Protokollstapels und mit bestimmten Schichten des besagten ersten Protokollstapels (C₂, C₃, C₄) bildet, und dass die besagten ersten und zweiten spezifischen Softwareteile (13, 23a) angeordnet sind, um eine Protokollwandlung zwischen einem Protokoll der Art Netzwerk durchzuführen, in dem Informationen des Netzwerkes, des Terminals oder der besagten Applikation zum Ausdruck kommen, und einem Kommunikationsprotokoll zwischen den besagten unteren Schichten, und dadurch, dass die besagten ersten und zweiten spezifischen Softwareteile (13, 23a) gemeinsam zusammenwirken, um das Zustandekommen einer Sitzung für den bidirektionalen Datenaustausch zwischen dem Terminal (1) und der Chipkarte (2a) und/oder dem besagten Netzwerk (RI) zu ermöglichen, so dass die besagten Daten ganz oder teilweise über die Chipkarte (2a) laufen.

2. System nach Anspruch 1, in dem die besagten spezifischen Softwareteile so angeordnet sind, dass die besagte Chipkarte (2a) dem besagten Terminal (1) ein als virtuell bezeichnetes vorbestimmtes Terminalmodell vorliegt, das die besagte Chipkarte (2a) in einen Server und/oder Kunden verwandelt.

3. System nach einem beliebigen der Ansprüche 1 oder 2, **dadurch gekennzeichnet, dass** der erste Protokollstapel einerseits Zugangsschaltungen auf das Netzwerk (11) umfasst, die die so genannten unteren Schichten (C₁, C₂) zusammenfassen, andererseits so genannte obere Schichten (C₃, C₄), schließlich eine Schnittstellenschicht (15), die zwischen den unteren und oberen Schichten liegt, wobei die Zugangsschaltungen zum Netzwerk mit dem besagten Netzwerk (RI) verbunden sind, und dadurch, dass das besagte spezifische Softwareteil (13a) auf der Terminalseite (1a) eine Schnittstelle mit der Schnittstellenschicht (15) bildet, so dass der besagte Terminal (1a) und die besagte Chipkarte (2a) im Netzwerk (RI) unter dem Befehl des spezifischen Softwareteils (13a) auf der Terminalseite eine gleiche Adresse teilen können.

4. System nach einem beliebigen der Ansprüche 1 bis 3, **dadurch gekennzeichnet, dass** die besagten spezifischen Softwareteile (13, 23a) folgendes umfassen:
- mindestens ein Paar erster zusammengehörender Softwareeinheiten (132, 232a), die aus Softwaremodulen bestehen und so genannte intelligente Agenten (132, 232a) sind, die die besagten Sitzungen herstellen;
- zwei zusätzliche Einheiten, die aus einem Datentransfermodul (130, 230a) bestehen und eine Schnittstelle mit den besagten unteren Schichten (CC₂-CC₁, CCa₂-CCa₁) der zweiten und dritten Protokollstapel bilden; und
- ein Verwaltungsmodul (131, 231).

5. System nach Anspruch 4, **dadurch gekennzeichnet, dass** die besagten intelligenten Agenten (132, 232a) als Kunden bezeichnete intelligente Agenten umfassen, die die besagten Datenaustauschsitzungen eröffnen, und als Server bezeichnete intelligente Agenten, die die besagten Daten liefern.

6. System nach Anspruch 4, **dadurch gekennzeichnet, dass** die besagten intelligenten Agenten (132, 232a) mindestens einer der folgenden Bezeichnungen zugeordnet sind:
- eine erste so genannte "Host"-Bezeichnung, die angibt, dass sich der intelligente Agent im besagten Terminal (1) befindet;
- eine zweite so genannte "Karten"-Bezeichnung, die angibt, dass sich der intelligente Agent in der besagten Chipkarte (2a) befindet;
- eine dritte so genannte "lokale" Bezeichnung, die angibt, dass der intelligente Agent nicht mit dem besagten Netzwerk (*RI*) kommuniziert; und
- eine vierte so genannte "Netzwerk"-Bezeichnung, die angibt, dass der intelligente Agent mit dem besagten Netzwerk (*RI*) kommuniziert.

7. System nach Anspruch 3, **dadurch gekennzeichnet, dass** eine zusätzliche Hardwarevorrichtung (7) vorgesehen ist, die zwischen dem besagten Netzwerk (RI) und dem besagten Terminal (1) angeordnet ist, und dadurch, dass die besagte zusätzliche Hardwarevorrichtung (7) zwei Kommunikationsschaltungen (70, 71) enthält, die jeweils zwei als untere (C'₁-C'₂, C"₁-C"₂) bezeichnete Kommunikationsprotokollschichten umfassen, wobei die ersten Schaltungen (70) mit dem Netzwerk (RI) und die zweiten Schaltungen (71) mit den besagten Zugangsschaltungen zum Netzwerk (11) des Terminals (1b) verbunden sind, und dadurch, dass die zusätzliche Hardwarevorrichtung (7) an das besagte Lesegerät (3) für Chipkarten (2a) angeschlossen ist, und dadurch, dass das besagte spezifische Softwareteil (13b) auf der Terminalseite (1b) in der zusätzlichen Hardwarevorrichtung (7) enthalten ist sowie dadurch, dass es eine Schnittstelle mit den besagten unteren Schichten (C'₁-C'₂, C"₁-C"₂) der besagten ersten und zweiten Kommunikationsschaltungen (70, 71) und den so genannten unteren Schichten (CC₁, CC₂) des Lesegeräts (3) für Chipkarten (2a) bildet, so dass der Terminal (1b) und die Chipkarte (2a) unter dem Befehl des spezifischen Softwareteils (13b) auf der Terminalseite eine gleiche Adresse im Netzwerk (RI) teilen können.

8. System nach Anspruch 3, **dadurch gekennzeichnet, dass** das besagte spezifische Softwareteil (13c) auf der Terminalseite (1c) eine Schnittstelle mit den besagten unteren Schichten (CC₁, CC₂) des besagten zweiten Protokollstapels bildet und zwischen den so genannten oberen Schichten 3 und 4 (C₃, C₄) des besagten ersten Protokollstapels liegt, so dass sich der Terminal (1b), da die besagte Chipkarte (2a) eine andere Adresse als der Terminal (1c) im Netzwerk (RI) hat, für die Chipkarte (2a) unter dem Befehl des spezifischen Softwareteils (13c) des Terminals (1c) wie eine Zugangsbrücke zum Netzwerk (RI) verhält.

9. System nach Anspruch 3, **dadurch gekennzeichnet, dass** das besagte spezifische Softwareteil (13d) auf der Terminalseite (1d) eine Schnittstelle mit den besagten unteren Schichten (CC₁, CC₂) des besagten zweiten Protokollstapels bildet und zwischen einer Schicht des besagten und mit 4 bezeichneten (C4) oberen ersten Protokollstapels und einer so genannten Applikationsschicht liegt, so dass die Zirkulation von Applikationsdaten zwischen der besagten Chipkarte (2a) und dem Terminal (1d) erlaubt wird.

10. Anwendungsverfahren eines Systems nach Anspruch 4, **dadurch gekennzeichnet, dass** es einen Schritt umfasst, der in der Herstellung einer Sitzung zwischen den Agenten eines bestimmten Paars der besagten Agenten (132, 232a) besteht, so dass dem besagten Terminal (1) in der besagten Chipkarte (2a) gespeicherte Daten einer Applikation (24a) übertragen werden, wobei die besagten Daten aus einer Liste (*P*) von für einen Anwender des Terminals erlaubten Applikationen bestehen.

11. Verfahren nach Anspruch 10, **dadurch gekennzeichnet, dass** das besagte Netzwerk (*RI*) vom Typ Internet ist und der besagte Terminal (1) einen Internetnavigator (10) umfasst, wobei die besagten Daten aus einer in einer Hypertext-Sprache geschriebenen Seite (*P*) bestehen, die Hyperlinks (*Hl*₁-*Hl*ₙ) umfassen, welche auf in externen Servern (4) in Bezug auf den Terminal (1) enthaltene Ressourcen hinweisen, und dadurch, dass die Auswahl eines solchen Hyperlinks (*Hl*_{*i*}) zu einer bestimmten Adresse führt und bestimmte Paare intelligenter Agenten (132₁-232a₁, 132₂-232a₂) zum Handeln bringt, die Sitzungen für den Datenaustausch zwischen dem Terminal (1) und der besagten Chipkarte (2a) sowie dem Terminal (1) und dem besagten Internetnetzwerk (*RI*) einführen, so dass die besagte gewählte Ressource (4) erreicht wird, wobei die besagten Daten ganz oder teilweise über die Chipkarte (2a) laufen.

12. Verfahren nach Anspruch 11, **dadurch gekennzeichnet, dass** das Adressieren der besagten Chipkarte (2a) über besagten Internetnavigator (10) durch Erzeugen einer Schleifenadresse am besagten Terminal (1) erfolgt.

13. Verfahren nach Anspruch 11, **dadurch gekennzeichnet, dass** es einen Identifizierungsschritt des besagten Anwenders und ein Filtern der empfangenen und gesendeten Daten von und zum besagten Netzwerk (*RI*) mittels von geheimen Daten auf der besagten Chipkarte (2a) umfasst, und dadurch, dass dieser Schritt in der Chipkarte (2a) vollzogen wird.

14. Anwendungsverfahren eines Systems nach Anspruch 4, **dadurch gekennzeichnet, dass** es einen Schritt umfasst, der in der Herstellung einer Sitzung zwischen den Agenten eines bestimmten Paars der besagten Agenten (132, 232a) besteht, so dass dem besagten Terminal (1) in der besagten Chipkarte (2a) gespeicherte Daten einer Applikation (24a) übertragen werden, wobei die besagten Daten den Terminal (1) gemäß einem virtuellen Terminalmodell konfigurieren, so dass die besagte Applikation im Terminal (1) ausgeführt werden kann.

15. Terminal (1) mit einem Lesegerät für Chipkarten (3), der einen ersten Protokollstapel zur Kommunikationsherstellung zwischen einer Applikation des Terminals mit einem Datenübertragungsnetzwerk (*RI*) besitzt, das eine bestimmte Anzahl von Kommunikationssoftwareschichten (C₁-C₄) umfasst, wobei das besagte Lesegerät für Chipkarten (3) einen zweiten Protokollstapel mit mindestens als untere bezeichnete Softwarekommunikationsschichten (CC₂-CC₁) umfasst, so dass zwischen einer Chipkarte und dem besagten Terminal (1) ein Datenaustausch möglich wird, **dadurch gekennzeichnet, dass** er ein spezifisches Softwareteil (13) umfasst, das dafür sorgt, dass nur die so genannten unteren Schichten (CC₂-CC₁) des zweiten Protokollstapels mit bestimmten Schichten des so genannten ersten Protokollstapels (C₂, C₃, C₄) kommunizieren, indem alle oder ein Teil der Daten über eine Chipkarte laufen, und dadurch, dass das besagte spezifische Softwareteil (13) zur Teilnahme an einer Protokollkonversion zwischen einem Netzwerkprotokoll, in dem Informationen des Netzwerkes, des Terminals oder der Chipkarte zum Ausdruck kommen, und einem Kommunikationsprotokoll angeordnet ist, das von den besagten unteren Schichten verwendet wird.

16. Chipkarte (2a) mit einem Protokollstapel, der mindestens so genannte untere Softwarekommunikationsschichten (CCa₂-CCa₁) umfasst, so dass ein Datenaustausch mit einem Terminal (1) mit Zugriff auf ein Datenübertragungsnetzwerk (RI) und mit einem Lesegerät für Chipkarten ermöglicht wird, **dadurch gekennzeichnet, dass** sie ein spezifisches Softwareteil (23a) umfasst, das eine Schnittstelle mit den besagten unteren Schichten (CCa₂-CCa₁) des Protokollstapels und mit mindestens einer in der Chipkarte gespeicherten Applikation bildet, und dadurch, dass das besagte spezifische Softwareteil (23a) zur Teilnahme an einer Protokollkonversion zwischen einem Netzwerkprotokoll, in dem Informationen des Netzwerkes, des Terminals oder der Chipkarte zum Ausdruck kommen, und einem Kommunikationsprotokoll angeordnet ist, das von den besagten unteren Schichten verwendet wird.

## Claims

1. Communication system between a terminal (1) equipped with a smart card reader (3), a smart card and/or a data transmission network (*RI*), said terminal having a first protocol stack for access to the network (*RI*) comprising a given number of communication software layers (C₁-C₄), and said smart card reader (3) and said smart card comprising second and third protocol stacks, each comprising at least software communication layers (CC₂-CC₁, CCₐ₂-CCₐ₁), known as low level layers, so as to allow data exchanges between the smart card and said terminal (1), **characterised in that** the smart card (2a) comprises a first specific piece of software (23a), acting as interface with said low level layers (CCₐ₂, CCₐ₁) of the third protocol stack and with at least one application (24a) stored in the smart card (2a), **in that** the terminal (1) comprises a second specific piece of software (13) acting as interface with said low level layers (CC₂-CC₁) of the second protocol stack and with given layers of said first protocol stack (C₂, C₃, C₄), **in that** said first and second specific pieces of software (13, 23a) are designed to perform protocol conversion between a network type protocol in which information concerning the network, the terminal or said application are expressed, and a communication protocol between said low level layers, and **in that** said first and second specific pieces of software (13, 23a) co-operate with each other in order to set up a bidirectional data exchange session between the terminal (1) and the smart card (2a), and/or said network (*RI*), so that all or some of said data transits via the smart card (2a).

2. System according to claim 1, in which said specific pieces of software are designed so that said smart card (2a) presents to said terminal (1) a predetermined "virtual" terminal model converting said smart card (2a) into server and/or client.

3. System according to any of claims 1 or 2, **characterised in that** the first protocol stack comprises firstly network access circuits (11) including "low level" layers (C₁, C₂), secondly "high level" layers (C₃, C₄), and lastly an interface layer (15) inserted between the low and high level layers, the network access circuits being connected to said network (*RI*), and **in that** said specific piece of software (13a), terminal (1a) end, interfaces with the interface layer (15) so that said terminal (1a) and said smart card (2a) can share the same address on the network (*RI*) under the control of the specific piece of software (13a), terminal end.

4. System according to any of claims 1 to 3, **characterised in that** said specific pieces of software (13, 23a) comprise:
- at least one pair of first paired software entities (132, 232a) consisting of software modules, known as intelligent agents (132, 232a) setting up said sessions;
- two additional entities consisting of a data transfer module (130, 230a), acting as interface with said low level layers (CC₂-CC₁, CCₐ₂-CCₐ₁) of the second and third protocol stacks; and
- a management module (131, 231).

5. System according to claim 4, **characterised in that** said intelligent agents (132, 232a) comprise "client" intelligent agents opening said data exchange sessions, and "server" intelligent agents, supplying said data.

6. System according to claim 4, **characterised in that** said intelligent agents (132, 232a) are associated with at least one of the following attributes:
- a first "host" attribute, indicating that the intelligent agent is located in said terminal (1);
- a second "card" attribute, indicating that the intelligent agent is located in said smart card (2a);
- a third "local" attribute, indicating that the intelligent agent does not communicate with said network (*RI*); and
- a fourth "network" attribute, indicating that the intelligent agent communicates with said network (*RI*).

7. System according to claim 3, **characterised in that** an additional hardware device (7) is planned between said network (*RI*) and said terminal (1), **in that** said additional hardware device (7) includes two communication circuits (70, 71), each comprising two "low level" communication protocol layers (C'1-C'2, C"1-C"2), the first circuits (70) being connected to the network (*RI*) and the second circuits (71) being connected to said network access circuits (11) of the terminal (1b), **in that** the additional hardware device (7) is connected to said smart card (2a) reader (3), and **in that** said specific piece of software (13b), terminal (1b) end, is comprised in the additional hardware device (7) and **in that** it acts as interface with said low level layers (C'1-C'2, C"1-C"2) of said first and second communication circuits (70, 71) and the "low level" layers (CC1, CC2) of the smart card (2a) reader (3), so that the terminal (1b) and the smart card (2a) can share the same address on the network (*RI*), under the control of the specific piece of software (13b), terminal end.

8. System according to claim 3, **characterised in that** said specific piece of software (13c), terminal (1c) end, acts as interface with said low level layers (CC1, CC2) of said second protocol stack, and is inserted between high level layers, called levels 3 and 4 (C3, C4), of said first protocol stack, so that, said smart card (2a) having an address different from the terminal (1c) on the network (*RI*), the terminal (1b) behaves, for the smart card (2a), as a gateway to access the network (*RI*), under the control of the specific piece of software (13c) of the terminal (1c).

9. System according to claim 3, **characterised in that** said specific piece of software (13d), terminal (1d) end, acts as interface with said low level layers (CC1, CC2) of said second protocol stack, and is inserted between a layer of said first protocol stack of higher level, called level 4 (C4), and an "application" layer, so that application data can transit between said smart card (2a) and the terminal (1d).

10. Method for the use of a system according to claim 4, **characterised in that** it comprises a step consisting in setting up a session between the agents of a given pair of said agents (132, 232a), so as to transmit to said terminal (1) data of an application (24a) stored in said smart card (2a), said data consisting of a list (P) of applications authorised to a user of the terminal.

11. Method according to claim 10, **characterised in that** said network (*RI*) being an Internet type network and said terminal (1) comprising an Internet browser (10), said data consists of a page (P) written in a hypertext language comprising hyperlinks (Hl₁-Hlₙ) pointing to resources included in servers (4) external to the terminal (1), and **in that** selection of one of said hyperlinks (Hlᵢ) generates a given address and actuates given pairs of intelligent agents (132₁-232ₐ₁,132₂-232ₐ₂), setting up sessions allowing data exchanges between the terminal (1) and said smart card (2a), and the terminal (1) and said Internet network (*RI*), so as to reach said selected resource (4), some or all of said data transiting via the smart card (2a).

12. Method according to claim 11, **characterised in that** the addressing of said smart card (2a) by said Internet browser (10) is carried out by generating a loopback address on said terminal (1).

13. Method according to claim 11, **characterised in that** it comprises a step to identify said user and filter the data received and sent, from and to said network (*RI*), using secret data stored in said smart card (2a), and **in that** this step is performed in the smart card (2a).

14. Method for the use of a system according to claim 4, **characterised in that** it comprises a step consisting in setting up a session between the agents of a given pair of said agents (132, 232a), so as to transmit to said terminal (1) data of an application (24a) stored in said smart card (2a), said data configuring the terminal (1) according to a virtual terminal model, so that said application can be executed in the terminal (1).

15. Terminal (1) equipped with a smart card reader (3), having a first protocol stack used to set up communication between an application of the terminal and a data transmission network (*RI*), comprising a given number of communication software layers (C1-C4), and said smart card reader (3) comprising a second protocol stack comprising at least software communication layers (CC2-CC1), known as low level layers, so as to allow data exchanges between a smart card and said terminal (1), **characterised in that** it comprises a specific piece of software (13) such that only said low level layers (CC2-CC1) of the second protocol stack communicate with given layers of said first protocol stack (C2, C3, C4) by transiting all or some of the data via a smart card and **in that** said specific piece of software (13) is designed to participate in protocol conversion between a network type protocol in which information concerning the network, the terminal or the smart card are expressed and a communication protocol used by said low level layers.

16. Smart card (2a) including a protocol stack comprising at least "low level" software communication layers (CCₐ₂-CCₐ₁) so as to allow data exchanges with a terminal (1) having access to a data transmission network (*RI*) and equipped with a smart card reader, **characterised in that** it comprises a specific piece of software (23a) acting as interface with said low level layers (CCₐ₂-CCₐ₁) of the protocol stack and with at least one application stored in the smart card, and **in that** said specific piece of software (23a) is designed to participate in protocol conversion between a network type protocol in which information concerning the network, the terminal or smart card are expressed, and a communication protocol used by said low level layers.
